# EUROPEAN PATENT SPECIFICATION

(11) **EP 0 495 292 B1**
(45) Date of publication and mention of the grant of the patent: **22.01.1997**
(21) Application number: 91308465.3
(22) Date of filing: 17.09.1991
(51) Int. Cl.: B29C 63/04

(54) **Automotive interior components, and method and device for manufacturing the same**
Kraftfahrzeug-Innenverkleidungsteile und Verfahren und Vorrichtung zu deren Herstellung
Eléments de l'intérieur d'un véhicule et procédé et dispositif pour leur fabrication

(30) Priority: 16.01.1991 JP 3338/91
(43) Date of publication of application: 22.07.1992
(73) Proprietor: KASAI KOGYO CO., LTD., Tokyo 103 (JP)
(72) Inventor: Itoh, Shoichi, c/o Samukawa Factories, Kasai, Kouza-gun, Kanagawa-ken 253-01 (JP); Yabushita, Shozo, c/o Samukawa Factories, Kasai, Kouza-gun, Kanagawa-ken 253-01 (JP)
(74) Representative: Ben-Nathan, Laurence Albert

(56) References cited:
- DE-A- 834 649
- DE-A- 3 327 462
- FR-A- 2 240 107
- FR-A- 2 429 667
- GB-A- 1 520 842
- US-A- 3 075 862
- US-A- 4 035 224
- PATENT ABSTRACTS OF JAPAN vol. 7, no. 269 (M-259)(1414) 30 November 1983 & JP-A-58 147 316 (MATSUSHITA DENKO K.K.) 2 September 1983
- PATENT ABSTRACTS OF JAPAN vol. 9, no. 77 (M-369)(1800) 6 April 1985 & JP-A-59 207 221 (SEKISUI KAGAKU KOGYO K.K.) 24 November 1984

## Description

### TECHNICAL FIELD

The present invention relates to automotive interior components such as automotive door trims as well as a method and device for manufacturing the same.

### BACKGROUND OF THE INVENTION

As a general structure for automotive interior components such as door trims, there is known the laminated structure in which a surface skin member having a cushioning and favorable appearance quality is bonded over a surface of a core member having the capability to retain its shape and the rigidity required for mounting it on a door panel.

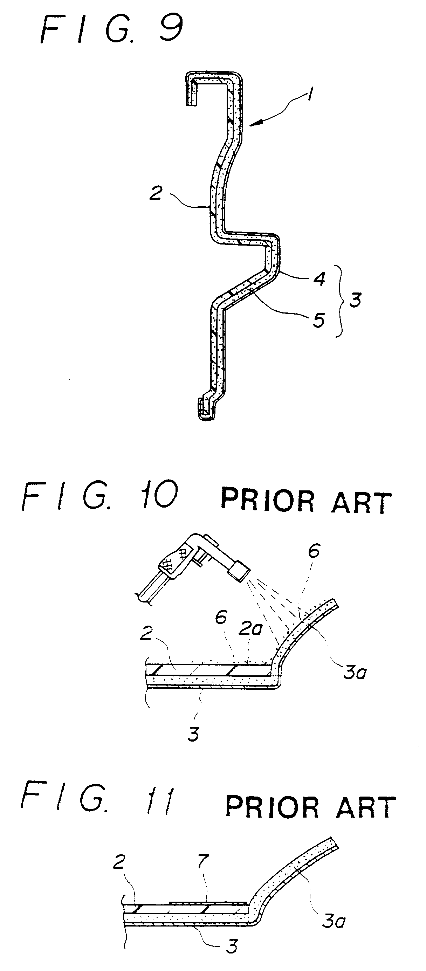

Figure 9 shows the structure of an automotive door trim 1 given here as a typical example of automotive interior component. In this door trim 1, a surface skin member 3 is integrally bonded over a surface of a resin core member 2 molded into a desired shape, and this surface skin member 3 consists of a surface skin sheet 4 with a back lining of a foamed layer 5 of such a material as polyethylene foam or polypropylene foam to ensure a necessary buffering or cushioning and ornamental quality. Along the edge of the product, the surface skin member 3 is folded over and bonded to the reverse surface of the resin core member 2 along its edge to produce a favorable edge finish.

To realize such a structure, as shown in Figure 10, a bonding agent 6 is applied to a reverse surface of a peripheral portion 2a of the resin core member 2 and a reverse surface of a peripheral portion 3a of the surface skin member 3 extending beyond the edge of the resin core member 2 so that the peripheral portion 3a of the surface skin member 3 may be securely attached to the peripheral portion 3a of the reverse surface of the resin core member 3 by means of the bonding capability of the bonding agent 6.

When a tactic resin such as polypropylene is used as the material for the resin core member 2 by taking into account such considerations as cost, moldability and mechanical strength, since the tactic resin is chemically stable and lacks the bonding capability based on chemical or ionic bonding, it is necessary to make the surface reasonably coarse by using sand paper or the like or to apply a primer layer 7 (such as carbontetrachloride) thereon, as illustrated in Figure 11, before applying a coating of the bonding agent 6.

Thus, according to the conventional automotive interior component, since the folded back peripheral portion 3a of the surface skin member 3 is secured by adhesive bonding, the edge processing for the surface skin member required the three steps of applying a bonding agent thereto, drying (reactivating) the bonding agent, and bonding of the folded back peripheral portion 3a, and these steps required such devices and facilities as a bonding agent applying booth, an oven and a bonding device which contribute to a substantial increase in manufacturing cost.

Further, since the bonding agent contains an organic solvent, the working environment is not favorable, and a ventilation system such as a ventilation duct becomes necessary to expel the solvent from the working environment. Thus, the need for facilities related to the use of a bonding agent also contributes to the increase in cost.

JP-A-58147316 discloses a vacuum molding device for producing a building board having male and female tongue sections at opposed edges and having a resin sheet applied thereto. Both ends of the sheet are applied by vacuum around the tongue sections and are thereby bonded thereto. Hot air is blown over the tongue sections to remove wrinkles in edge sections of the resin sheet bonded thereto.

### BRIEF SUMMARY OF THE INVENTION

In view of such problems of the prior art, a primary object of the present invention is to provide an automotive interior component in which the peripheral portion of the surface skin member can be securely attached to the reverse surface of the resin core member along its edge without using any bonding agent.

Further, in view of the fact that the use of polypropylene resin as the resin core member necessarily involved the need for the five steps of primer application, drying, bonding agent application, drying (reactivation), and bonding, another object of the present invention is to provide an automotive interior component using a polypropylene core member which allows a substantial simplification of the edge processing step for the surface skin member.

Yet another object of the present invention is to provide a method and device for simply and efficiently manufacturing such an automotive component part according to the present invention.

These and other objects of the present invention can be accomplished by providing an automotive interior component in accordance with Claim 1.

The invention also includes a method in accordance with Claim 6.

The invention further includes a device in accordance with Claim 8.

As can be understood from the above described structure, since the folded back peripheral portion of the surface skin member is secured to the peripheral portion of the reverse surface of the resin core member by thermal welding, the need for a bonding agent or a primer can be eliminated.

Such a structure can be favorably manufactured by thermally melting the reverse surface of the peripheral edge portion of the resin core member and the reverse surface of the peripheral portion of the surface skin member by blowing hot air thereto; and folding back the peripheral portion of the surface skin member onto the reverse surface of the peripheral portion of the resin core member, and thermally welding the folded back peripheral portion of the surface skin member to the reverse surface of the peripheral edge portion of the resin core member.

Preferably, the peripheral portions of the resin core member and the surface skin member are thermally melted simultaneously by common hot air blower means when the resin core member and the surface skin member are combined as a half-finished assembly with the peripheral portion of the surface skin member extending beyond the peripheral edge portion of the resin core member. The common hot air blower means may comprise an annular hot air pipe surrounding the peripheral portions of the resin core member and the surface skin member, and provided with orifices for blowing hot air thereto.

Thereby, it is possible to heat and melt the reverse surface of the peripheral edge portion of the resin core member along with the reverse surface of the peripheral portion of the surface skin member which is to be folded back onto the peripheral portion of the resin core member, simultaneously, in a quick and efficient manner.

### BRIEF DESCRIPTION OF THE DRAWINGS

Now the present invention is described in the following with reference to the appended drawings, in which:
Figure 1 is a sectional view showing an embodiment of the automotive interior component according to the present invention as applied to an automotive door trim;
Figure 2 is a sectional view showing the structure of the device for manufacturing the automotive door trim according to the present invention;
Figure 3 is a sectional view showing a trimming step constituting one of the steps of the method of the present invention;
Figure 4 is a sectional view showing a transport step constituting one of the steps of the method of the present invention;
Figure 5 is a sectional view showing a work retaining step in a edge processing step constituting one of the steps of the method of the present invention;
Figure 6 is a sectional view showing a hot air blowing step constituting one of the steps of the method of the present invention;
Figure 7 is a sectional view showing a step of placing a half finished product on a platform constituting one of the steps of the method of the present invention;
Figure 8 is a sectional view showing a step of folding back a peripheral portion of the surface skin member constituting one of the steps of the method of the present invention;
Figure 9 is a sectional view showing the structure of a conventional automotive door trim;
Figure 10 is a sectional view showing an example of conventional folding back step; and
Figure 11 is a sectional view showing an example of conventional folding back step.

### DETAILED DESCRIPTION OF THE PREFERRED EMBODIMENT

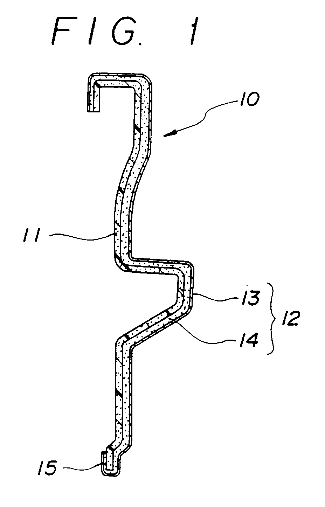

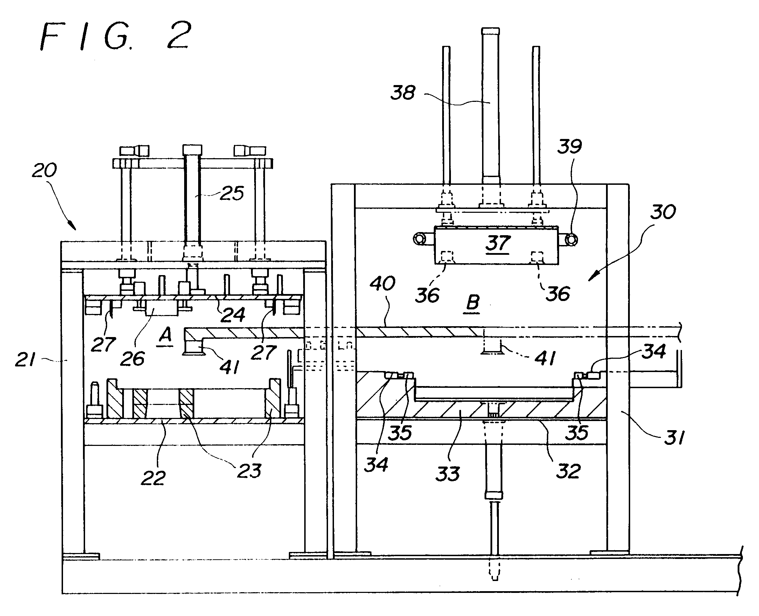

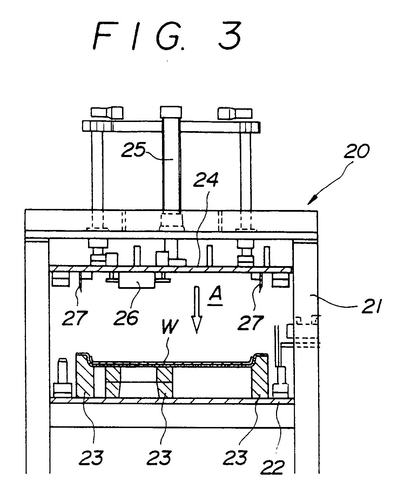

Figure 1 is a sectional view of the structure of an embodiment of the automotive interior component according to the present invention as applied to an automotive door trim; Figure 2 is a sectional view of a device for manufacturing a door trim according to the method of the present invention; and Figures 3 through 8 are sectional views showing the different steps of the method of the present invention.

First of all, the structure of the automotive door trim according to the present invention is described. This automotive door trim 10 essentially consists of a resin core member 11 molded into a required shape, and a surface skin member 12 integrally bonded over a surface of the resin core member 11.

More specifically, the resin core member 11 is made of such polyolefin resin as polypropylene resin by taking into account such considerations as cost, moldability and mechanical strength, and the surface skin member 12 consists of a laminated sheet in which a foamed layer 14 such as a polyethylene foam or a polypropylene foam is laminated over the reverse surface of a surface skin sheet 13 such as a PVC sheet. A peripheral portion 15 of the surface skin member 12 is intended to be folded over the reverse surface of the resin core member 11 along its edge, and is secured thereto by thermal welding.

Therefore, a primary difference from the conventional door trim is found in the fact that the peripheral portion 15 is secured by thermal welding instead of adhesive bonding.

Therefore, the need for such materials as a primer and a bonding agent can be eliminated, and the manufacturing steps such the steps of primer application and bonding agent application can be eliminated, thereby allowing simplification of the manufacturing facilities and reduction of the manufacturing cost.

Further, the impairment of the working condition through the use of a bonding agent can be avoided.

Now the method and device for manufacturing the automotive door trim 10 are described in the following.

Figure 2 is a simplified view showing the structure of a manufacturing device for carrying out the method of the present invention. This device comprises a trimming device 20 forming a trim cut station A for cutting the resin core member 11 and the surface skin member 12 into desired shapes, and an edge processing device 30 forming an edge processing station B for the surface skin member 12 for carrying out an edge folding back step and a welding step.

Further, the trimming device 20 is provided with platforms 23 disposed on a lower table 22 supported by corner portions of a support frame 21 for receiving a half finished product W which is to be worked on. Above the platforms 23 is disposed an upper die 24 which is coupled to an actuating cylinder 25 for vertically moving the upper die 24. This upper die 24 is provided with a cutting blade 26 for forming an opening in the resin core member 11, and another cutting blade 27 for cutting off a peripheral portion of the surface skin member 12.

Now the structure of the edge processing device 30 for the surface skin member is described in the following.

As transport means for conveying the work from the trim cut station A to the edge processing station B, a transport cylinder 40 is arranged between the two stations. This transport cylinder 40 is provided with an air suction pad 41 for retaining a molded object by vacuum suction.

In this edge processing device 30, a platform 33 is provided on a lower table 32 which is supported by a support frame 31 at corner portions thereof, and a plurality of sliders 35 actuated by cylinders 34 are arranged around this platform 33. These sliders 35 are used for the purpose of folding back the peripheral portion 15 of the surface skin member 12 onto the reverse surface of the resin core member 11 along its edge.

Above the platform 33 is disposed a support member 37 which retains the molded object by air suction pads 36, and this support member 37 can be moved vertically by an actuating cylinder 38. A hot air supply pipe 39 is arranged around the support member 37 at its upper position.

The manufacturing device of the present invention is provided with the above described structure, and the method of the present invention is particularly characterized by the steps subsequent to the trimming step which are now going to be described in the following.

First of all, as illustrated in Figure 3, after a half-finished product W is placed on the platforms 23, the resin core member 11 is pierced through and the peripheral edge of the surface skin member 12 is cut away in a desired shape by the cutting blades 26 and 27, respectively, as the upper die 24 is lowered by the action of the cylinder 25 in the trim cut station.

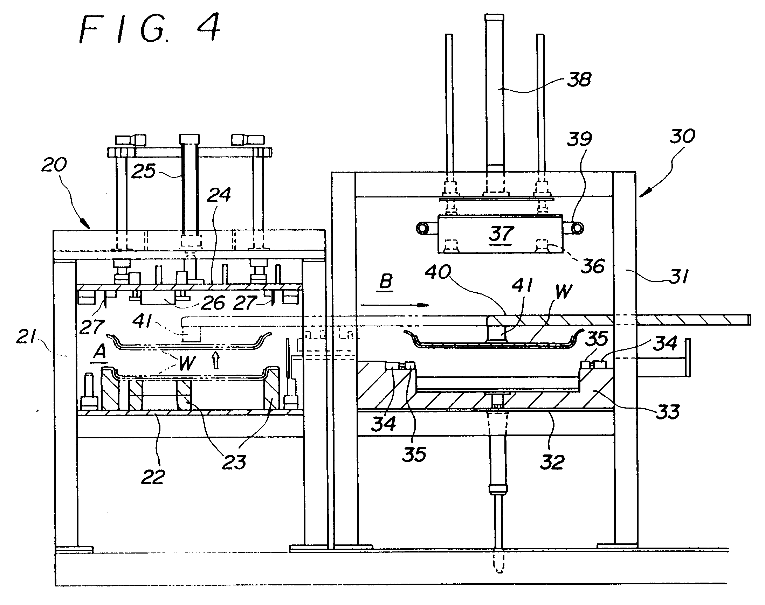

Then, the half finished product W which was cut on the platforms 23 is retained and handled by the air suction pads 41 of the transport cylinder 40. Thereafter, as shown in Figure 4, the transport cylinder 40 is driven from the position indicated by the chain-dot line to the position indicated by the solid line in Figure 4 to convey the half finished product W to the edge processing station B.

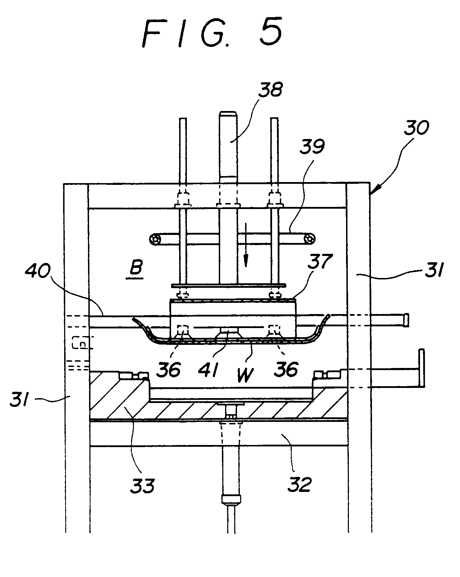

After the half finished product W is secured at the edge processing station B by the air suction pads 41, as shown in Figure 5, the support member 37 is lowered by the actuating cylinder 38, and the suction of the air suction pads 41 of the transport cylinder 40 is shut off while the half finished product W is secured by the air suction pads 36 of the support member 37.

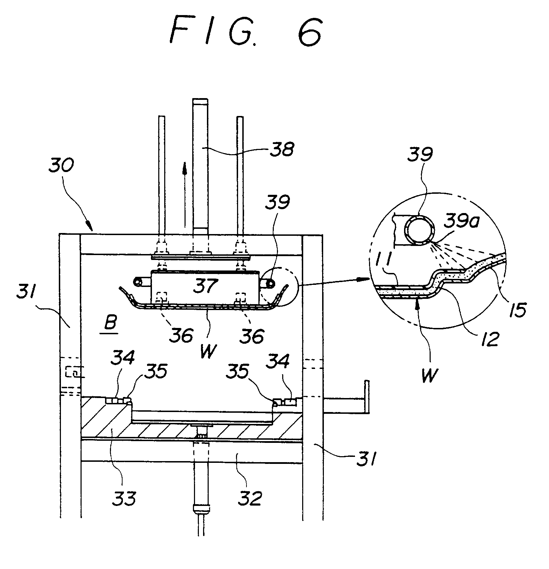

After the transport cylinder 40 is retracted away from the edge processing station B, the support member 37 is lifted to the position indicated in Figure 6 by the actuating cylinder 38.

Hot air from orifices 39a provided in the annular hot air supply pipe 39 is then blown to the reverse surface of the peripheral portion of the resin core member 11 and the reverse surface of the peripheral portion 15 of the surface skin member 12 which jointly form the half finished product W. The step of blowing hot air is carried out under the temperature condition of 250 °C or higher for the time duration of 10 seconds.

By this step of blowing hot air, the resin core member 11 and the foamed layer 14 are both heated to a temperature in the range of 170 to 230 °C, and are in substantially molten state.

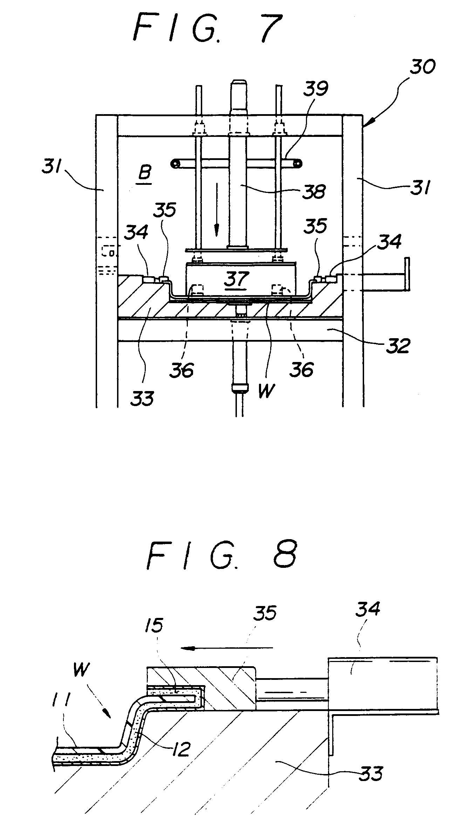

With the reverse surface of the resin core member 11 and the reverse surface of the peripheral portion 15 of the surface skin member 12 in molten or semi-molten state, the support member 37 is lowered to its lowermost position by the cylinder 38, and the half finished product W is set up on the upper surface of the platform 33 (refer to Figure 7).

Thereafter, the sliders 35 are moved forward and backward by the cylinders 34, and the peripheral portion 15 of the surface skin member 15 is folded back and secured on the reverse surface of the resin core member 11. Since the resin core member 11 has a favorable capability to retain heat, it is capable of favorable attachment for 10 seconds or more even after application of hot air is terminated.

In this way, by using the manufacturing device of the present invention shown in Figure 2 and the manufacturing method of the present invention, it is possible to manufacture the automotive door trim 10 illustrated in Figure 1 in an efficient and economical fashion.

As described above, according to the automotive interior component of the present invention, since the peripheral portion of the surface skin member which is to be folded back is thermally welded and secured to the reverse surface of the resin core member, the need for a bonding agent and a primer is eliminated, and, since not only the material cost due to the need for a bonding agent and a primer may be reduced but also the investment on manufacturing facilities may be avoided, a substantial cost reduction owing to the simplification of the production steps and the production facilities can be accomplished. In particular, since the two surfaces which are two be welded together are both brought to a molten or semi-molten state, a favorable welding result can be produced. Further, the melting of the two surfaces can be carried out by a common hot air blower at the same time, thereby minimizing the requirements for the hardware and simplifying the manufacturing process.

Further, elimination of the need for a bonding agent can improve the working environment, and no facilities for ventilation would be necessary. Additionally, according to the manufacturing device and the manufacturing method of the present invention, since efficient mass production of high quality automotive interior components is made possible in a reliable fashion without requiring a bonding agent and a primer, an improvement in both productivity and quality can be achieved.

Although the present invention has been described in terms of a specific embodiment, it is possible to modify and alter details thereof without departing from the present invention.

## Claims

1. An automotive interior component (10), comprising:
a resin core member (11) consisting of polyolefin resin, and molded into a desired shape; and
a surface skin member (12) at least partly bonded over a surface of said resin core member (11), said surface skin member (12) consisting a laminated sheet formed by laminating a foam layer (14) of polyolefin resin over a reverse surface of a surface skin sheet (13) and being provided with a peripheral portion (15) extending beyond a peripheral edge portion of said resin core member (11), and said peripheral portion (15) of said surface skin member (12) being folded back and thermally welded onto a reverse surface of said peripheral edge portion of said resin core member (11).

2. An automotive interior component according to Claim 1, wherein said resin core member (11) consists of polypropylene resin.

3. An automotive interior component according to Claim 1, wherein said surface skin sheet (12) consists of a PVC sheet.

4. An automotive interior component according to Claim 3, wherein said foamed layer (14) consists of polyethylene foam.

5. An automotive interior component according to Claim 3, wherein said foamed layer (14) consists of polypropylene foam.

6. A method of manufacturing an automotive interior component (10) by folding back and securing a peripheral portion (15) of a surface skin member (12) which is at least partly bonded over a surface of a resin core member (11) onto a reverse surface of a peripheral edge portion of said resin core member (11), comprising the steps of:
thermally melting said reverse surface of said peripheral edge portion of said resin core member (11) and said reverse surface of said peripheral portion (15) of said surface skin member (12) by hot air thereto; and
folding back said peripheral portion (15) of said surface skin member (12) onto said reverse surface of said peripheral portion of said resin core member (11), and thermally welding said folded back peripheral portion (15) of said surface skin member (12) to said reverse surface of said peripheral edge portion of said resin core member (11);
wherein said resin core member (11) consists of polyolefin resin, and said skin member (12) consists of a laminated sheet formed by laminating a foam layer (14) of polyolefin resin over a reverse surface of a surface skin sheet (13).

7. A method according to Claim 8, wherein said peripheral portions of said resin core member (11) and said surface skin member (12) are thermally melted simultaneously by common hot air blower means (39) when said resin core member and said surface skin member are combined as a half-finished assembly with said peripheral portion of said surface skin member extending beyond said peripheral edge portion of said resin core member.

8. A device for manufacturing an automotive interior component (10), comprising:
a trim cut station (A) for cutting off a prescribed portion of a half-finished product (W) consisting of an integral combination of a resin core member (11) and a surface skin member (12);
an edge processing station (B) for folding back and welding a peripheral portion (15) of said surface skin member (12) onto a reverse surface of a peripheral edge portion of said resin core member (11), said edge processing station (B) comprising hot air supply means (39) for supplying hot air onto said reverse surface of said peripheral portion of said resin core member (11) and a reverse surface of said peripheral portion (15) of said surface skin member (12);
transport means (40) for conveying a half finished assembly (W) of said surface skin member (12) and said resin core member (11) from said trim cut station (A) to said edge processing station (B); and
a slider (35) for folding back said peripheral portion (15) of said surface skin member (12) onto said reverse surface of said resin core member (11);
wherein said resin core member (11) consists of polyolefin resin, and said skin member (12) consists of a laminated sheet formed by laminating a foam layer (14) of polyolefin resin over a reverse surface of a surface skin sheet (13).

9. A device according to Claim 8, wherein said hot air supply means comprises an annular hot air pipe (39) surrounding said peripheral portions of said resin core member and said surface skin member, and provided with orifices (39a) for blowing hot air thereto.

10. A device according to Claim 8, wherein said hot air supply means comprises an annular hot air pipe (39) surrounding said peripheral edge portion(s) of said resin core member (11) and said surface skin member (12), and provided with orifices (39a) for blowing hot air thereto.

## Patentansprüche

1. Kraftfahrzeug-Innenverkleidungs-Bauelement (10) umfassend:
einen Harzkern (11), bestehend aus einem Polyolefinharz mit einer Sollform, und
ein Oberflachenabdeckelement (12), das wenigstens teilweise mit der Oberfläche des Harzkernes (11) verbunden ist und aus einer Laminatfolie besteht, die durch Laminieren einer Schaumschicht (14) aus Polyolefinharz auf die Rückseite einer Oberflächenabdeckfolie (13) aufgebracht ist und mit einem Umfangsabschnitt (15) versehen ist, der sich über einen Umfangskantenabschnitt des Harzkernes (11) erstreckt, wobei der Umfangsabschnitt (15) des Oberflächenabdeckelements (12) nach hinten gefaltet und mit der Rückseite des Umfangskantenabschnitts des Harzkerns (11) thermoverschweißt ist.

2. KFZ-Innenverkleidungs-Bauelement nach Anspruch 1, bei dem der Harkern (11) aus Polypropylenharz besteht.

3. KFZ-Innenverkleidungs-Bauelement nach Anspruch 1; bei dem die Oberflächenabdeckfolie (12) aus einer PVC-Folie besteht.

4. KFZ-Innenverkleidungs-Bauelement nach Anspruch 3, bei dem die Schaumschicht (14) aus Polyäthylenschaum besteht.

5. KFZ-Innenverkleidungs-Bauelement nach Anspruch 3, bei dem die Schaumschicht (14) aus Polypropylenschaum besteht.

6. Verfahren zur Herstellung eines KFZ-Innenverkleidungs-Bauelements (10) durch Zurückfalten und Befestigen eines Umfangsabschnittes (15) eines Oberflächenabdeckelements (12), das wenigstens teilweise mit der Rückseite eines Umfangskantenabschnittes des Harzkerns (11) verbunden ist, umfassend die folgenden Schritte:
die Rückseite des Umfangskantenabschnittes des Harzkernelements (11) und die Rückseite des Umfangsabschnittes (15) des Oberflächenabdeckelements (12) werden durch Heißluftzufuhr thermisch geschmolzen, und
der Umfangsabschnitt (15) des Oberflächenabdeckelements (12) auf der Rückseite des Umfangsabschnittes des Harzkernelements (11) wird zurückgefaltet, und der zurückgefaltete Umfangsabschnitt (15) des Oberflächenabdeckelements (12) wird mit der Rückseite des Umfangskantenabschnittes des Harzkernelements (11) durch Thermoschweißen verbunden, wobei das Harzkernelement (11) aus Polyolefinharz, und das Abdeckelement (12) aus einer Laminatfolie besteht, die durch Laminieren einer Harzschicht (14) aus Polyolefinharz auf die Rückseite eines Oberflächenabdeckelements gebildet wird.

7. Verfahren nach Anspruch 8, bei dem die Umfangsabschnitte des Harzkernelements (11) und des Oberflächenabdeckelements (12) gleichzeitig durch ein gemeinsames Heißluftgebläse (39) thermisch geschmolzen werden, wenn der Harzkern und das Oberflächenabdeckelement als Halbfertig-Anordnung zusammen mit dem Umfangsabschnitt des Oberlächenabdeckelements kombiniert werden, das sich über den Umfangskantenabschnitt des Harzkerns erstreckt.

8. Vorrichtung zur Herstellung eines KFZ-Innenverkleidungs-Bauelements (10), umfassend:
eine Schneidstation (A) zum Abschneiden eines Sollobschnittes eines Halbfertigprodukts (W), bestehend aus
einer integralen Kombination eines Harzkerns (11) und eines Oberflächenabdeckelements (12),
einer Kantenbearbeitungsstation (B) zum Zurückfalten und Schweißen eines Umfangsabschnittes (15) des Oberflächenabdeckelements (12) auf die Rückseite eines Umfangskantenabschnittes des Harzkerns (11), wobei die Kantenbearbeitungsstation (B) eine Heißluftzufuhreinrichtung (39) für die Zufuhr von Heißluft auf die Rückseite des Umfangsabschnittes des Harzkerns (11) und die Rückseite des Umfangsabschnittes (15) des Oberflächenabdeckelements (12) hat,
einer Transporteinrichtung (14) zum Transport einer Halbfertig-Anordnung (W) des Oberflächenabdeckelements (12) und des Harzkerns (11) von der Verkleidungsschneidstation (A) zur Kantenbearbeitungsstation (B) und
einem Schieber (35) zum Zurückfalten des Umfangsabschnittes (15) des Oberflächenabdeckelements (12) auf die Rückseite des Harzkerns (11),
wobei der Harzkern (11) aus Polyolefinharz, und das Abdeckelement (2) aus einer Laminatfolie besteht, die durch Laminieren einer Schaumschicht (14) aus Polyolefinharz auf die Rückseite einer Oberflächenabdeckfolie (13) gebildet ist.

9. Vorrichtung nach Anspruch 8, bei der die Heißluftzufuhreinrichtung ein ringförmiges Heißluftrohr (39) hat, das die Umfangsabschnitte des Harzkerns und des Oberflächenabdeckelements umgibt und mit Blasöffnungen (39a) für die Zufuhr von Heißluft versehen ist.

10. Vorrichtung nach Anspruch 8, bei der die Heißluftzufuhreinrichtung ein ringförmiges Heißluftrohr (39) aufweist, das die Umfangskante(n) des Harzkerns (11) und des Oberflächenabdeckelements (12) umgibt, und mit Blasöffnungen (39a) für die Zufuhr von Heißluft versehen ist.

## Revendications

1. Elément (10) d'intérieur d'automobile, comprenant :
un organe (11) d'âme de résine constitué d'une résine de polyoléfine et moulé à une configuration voulue, et
un organe (12) de revêtement de surface lié au moins partiellement à une surface de l'organe (11) d'âme de résine, l'organe (12) de revêtement de surface étant constitué d'une feuille stratifiée formée par collage d'une feuille de mousse (14) d'une résine de polyéthylène à une face arrière d'une feuille de revêtement de surface (13) et ayant une partie périphérique (15) dépassant de la partie de bord périphérique de l'organe (11) d'âme de résine, la partie périphérique (15) de l'organe (12) de revêtement de surface étant repliée et soudée thermiquement à une surface arrière de la partie de bord périphérique de l'organe (11) d'âme de résine.

2. Elément d'intérieur d'automobile selon la revendication 1, dans lequel l'organe (11) d'âme de résine est formé d'une résine de polypropylène.

3. Elément d'intérieur d'automobile selon la revendication 1, dans lequel la feuille (12) de revêtement de surface est formée d'une feuille de PVC.

4. Elément d'intérieur d'automobile selon la revendication 3, dans lequel la couche (14) de mousse est formée d'une mousse de polyéthylène.

5. Elément d'intérieur d'automobile selon la revendication 3, dans lequel la couche de mousse (14) est formée d'une mousse de polypropylène.

6. Procédé de fabrication d'un élément (10) d'intérieur d'automobile par pliage et fixation d'une partie périphérique (15) d'un organe (12) de revêtement de surface qui est lié au moins partiellement à une surface d'un organe (11) d'âme de résine à une face arrière d'une partie de bord périphérique de l'organe (11) d'âme de résine, comprenant les étapes suivantes :
la fusion par chauffage de la face arrière de la partie de bord périphérique de l'organe (11) d'âme de résine et de la surface arrière de la partie périphérique (15) de l'organe (12) de revêtement de surface à l'aide d'air chaud, et
le pliage de la partie périphérique (15) de l'organe (12) de revêtement de surface à la face arrière de la partie périphérique de l'organe (11) d'âme de résine, et le soudage thermique de la partie périphérique repliée (15) de l'organe (12) de revêtement de surface à la face arrière de la partie de bord périphérique de l'organe (11) d'âme de résine,
dans lequel l'organe (11) d'âme de résine est formé d'une résine de polyoléfine, et l'organe (12) de revêtement est formé d'une feuille stratifiée formée par stratification d'une couche de mousse (14) de résine de polyoléfine à une face arrière d'une feuille (13) de revêtement de surface.

7. Procédé selon la revendication 6, dans lequel les parties périphérique de l'organe (11) d'âme de résine et de l'organe (12) de revêtement de surface subissent une fusion thermique simultanée à l'aide d'un ventilateur commun (39) d'air chaud lorsque l'organe d'âme de résine et l'organe de revêtement de surface sont combinés sous forme d'un ensemble semi-fini, la partie périphérique de l'organe de revêtement de surface dépassant au-delà de la partie de bord périphérique de l'organe d'âme de résine.

8. Appareil de fabrication d'un élément (10) d'intérieur d'automobile, comprenant :
un poste (A) de découpe destiné à retirer une partie prescrite d'un produit semi-fini (W) formé d'une combinaison solidaire d'un organe (11) d'âme de résine et d'un organe (12) de revêtement de surface,
un poste (B) de traitement de bord destiné à replier et souder une partie périphérique (15) de l'organe (12) de revêtement de surface à une surface arrière d'une partie de bord périphérique de l'organe (11) d'âme de résine, le poste (B) de traitement de bord comprenant un dispositif (39) d'alimentation en air chaud destiné à transmettre de l'air chaud à la surface arrière de la partie périphérique de l'organe (11) d'âme de résine et à une surface arrière de la partie périphérique (15) de l'organe de revêtement de surface (12),
un dispositif (40) de transport de l'ensemble semi-fini (W) de l'organe (12) de revêtement de surface et de l'organe (11) d'âme de résine du poste (A) de coupe au poste (B) de traitement de surface, et
un coulisseau (35) destiné à replier la partie périphérique (15) de l'organe (12) de revêtement de surface à la surface arrière de l'organe (11) d'âme de résine,
dans lequel l'organe (11) d'âme de résine est constitué d'une résine de polyoléfine, et l'organe de revêtement (12) est constitué d'une feuille stratifiée formée par collage d'une couche de mousse (14) de résine de polyoléfine à une face arrière d'une feuille (13) de revêtement de surface.

9. Appareil selon la revendication 8, dans lequel le dispositif de transmission d'air chaud comprend un tube annulaire (39) d'air chaud entourant les parties périphériques de l'organe d'âme de résine et de l'organe de revêtement de surface, et ayant des orifices (39a) de soufflage d'air chaud sur ces parties.

10. Appareil selon la revendication 8, dans lequel le dispositif de transmission d'air chaud comprend un tube annulaire (35) d'air chaud entourant la partie ou les parties de bord périphérique de l'organe (11) d'âme de résine et de l'organe (12) de revêtement de surface, et ayant des orifices (39a) de soufflage d'air chaud sur ces parties.
